# EUROPÄISCHE PATENTSCHRIFT

(11) **EP 4 211 419 B1**
(45) Veröffentlichungstag und Bekanntmachung des Hinweises auf die Patenterteilung: **30.04.2025**
(21) Anmeldenummer: 21763228.0
(22) Anmeldetag: 29.07.2021
(51) Int. Cl.: G01B 11/24, G01B 11/25, G01N 21/88, G06Q 10/00

(54) **FAHRZEUGOBERFLÄCHENANALYSESYSTEM**
VEHICLE SURFACE ANALYSIS SYSTEM
SYSTÈME D'ANALYSE DE SURFACE DE VÉHICULE

(30) Priorität: 14.09.2020 DE 102020005611; 14.09.2020 DE 202020003891 U
(43) Veröffentlichungstag der Anmeldung: 19.07.2023
(73) Patentinhaber: AUTO1 Group SE, 10961 Berlin (DE)
(72) Erfinder: BUGOVICS, Jozsef, 04109 Leipzig (DE); ZSOLT, Dudasz, 1202 Budapest (HU); SCHLÜTER, Hans, 04157 Leipzig (DE)
(74) Vertreter: Weihrauch, Frank
(86) Internationale Anmeldenummer: PCT/DE2021/000127
(87) Internationale Veröffentlichungsnummer: WO 2022/053089

(56) Entgegenhaltungen:
- DE-U1- 202013 002 483
- DE-U1- 202018 001 659
- BUCKLEY SIMON J ET AL: "Terrestrial lidar and hyperspectral data fusion products for geological outcrop analysis", COMPUTERS & GEOSCIENCES, PERGAMON, AMSTERDAM, NL, vol. 54, 8 February 2013 (2013-02-08), pages 249 - 258, XP028525895, ISSN: 0098-3004, DOI: 10.1016/J.CAGEO.2013.01.018

## Beschreibung

Die Erfindung betrifft ein Fahrzeuganalysesystem zur digitalen Erfassung und Bewertung der Oberflächenbeschaffenheit des zu erfassenden Fahrzeugs, insbesondere einer Lackoberfläche, sowie zur Bereitstellung der Oberflächenbeschaffenheit als ein digitales Abbild. Dokument DE 20 2018 001659 U1 offenbart ein Fahrzeugerfassungssystem zur Erzeugung eines n-dimensionalen digitalen Abbilds des zu erfassenden Fahrzeugs.

Aus dem Stand der Technik ist es dem Grunde nach bekannt, Fahrzeugoberflächen, insbesondere den Fahrzeuglack auf dessen Zustand zu überprüfen. Beispielsweise ist es bekannt, Lackschichtdickenmessungen mittels magnetinduktiver Verfahren durchzuführen. Nachteilig ist hierbei, dass diese bei nichtmagnetischen Fahrzeugbereichen nicht durchgeführt werden können. Ferner sind aus dem Stand der Technik Lackschichtmessgeräte mittels des Wirbelstromverfahrens bekannt. Diese können auch bei nichtmagnetischen Untergründen wie beispielsweise Aluminium eingesetzt werden. Als Nachteil verbleibt, dass eine Messung auf nichtmetallischen Untergründen wie beispielsweise an Kunststoffstoßstangen nicht möglich ist. Ferner liefern solche nach dem Stand der Technik bekannte Messgeräte lediglich eine Information über die Lackdicke, nicht jedoch über weitere Parameter, die für eine Beurteilung des Zustands relevant sein können. Nachteilig ist zudem, dass die Bestimmung lediglich punktuell und manuell erfolgt und es sich nicht um eine berührungslose Technologie handelt.

Die Aufgabe der Erfindung ist es, eine manipulationssichere, von subjektiven Beurteilungen unabhängige und einfach zu bedienende Lösung für die Erfassung und Bewertung des Zustands einer Fahrzeugoberfläche aufzuzeigen, mit der unterschiedliche Oberflächenarten eines Fahrzeugs mit möglichst geringem Zeit- und Personalaufwand erfassbar sind.

Die Aufgabe wird durch ein Fahrzeugoberflächenanalysesystem mit den im Patentanspruch 1 aufgeführten Merkmalen gelöst. Bevorzugte Weiterbildungen ergeben sich aus den Unteransprüchen.

Das erfindungsgemäße Fahrzeugoberflächenanalysesystem weist als Hauptkomponenten eine Fahrzeugpositionierungseinheit, eine optische Bilderfassungseinheit und eine Auswertungseinheit auf.

Die Fahrzeugpositionierungseinheit ist erfindungsgemäß dazu bestimmt, ein zu analysierendes Fahrzeug aufzunehmen und dessen räumliche Position in Bezug zu weiteren Komponenten des erfindungsgemäßen Systems zu definieren. Hierzu weist dies eine Plattform und eine Plattformpositionserfassungseinheit auf.

Die Plattform ist nach Größe und Belastbarkeit so ausgebildet, dass ein Fahrzeug aufstellbar ist. Das Fahrzeug selbst ist nicht Bestandteil der erfindungsgemäßen Vorrichtung. Als Fahrzeuge in diesem Sinne werden Landfahrzeuge, insbesondere Personenkraftwagen, verstanden. Die Plattform ist drehbar ausgebildet. Die Drehachse der Plattform entspricht der Vertikalachse des aufgestellten Fahrzeugs, so dass die Plattform im Wesentlichen waagerecht angeordnet ist. Die Plattform entspricht damit vorzugsweise der Bauform eines Drehtellers.

Die Plattformpositionserfassungseinheit ist so ausgebildet, dass mit ihr Plattformpositionsdaten erfassbar sind. Die Plattformpositionsdaten beschreiben die Winkelstellung der rotierbaren Plattform und damit mittelbar die Winkelstellung des aufgestellten Fahrzeugs. Wird die Plattform während eines Erfassungsvorgangs gedreht, können so Objektpunkte des Fahrzeuges, die bei unterschiedlichen Winkelstellungen unterschiedliche Koordinaten im Raum aufweisen, einander zugeordnet werden. Die Plattformpositionsdaten werden für die Übertragung an die Auswertungseinheit übertragbar bereitgestellt. Für die Übertragung der Plattformpositionsdaten sind die Fahrzeugpositionierungseinheit und die Auswertungseinheit miteinander datenverbunden.

Die optische Bilderfassungseinheit ist ausgebildet, mehrere, vorzugsweise eine hohe Anzahl von Bildaufnahmen von der Oberfläche des Fahrzeugs bereitzustellen, wobei hierbei erstens vorzugsweise die gesamte Oberfläche des Fahrzeugs erfasst wird und zweitens ein und dieselben Oberflächenabschnitte durch mehrere Bildaufnahmen zugleich erfasst werden.

Hierfür weist die optische Bilderfassungseinheit mehrere Bilderfassungseinzeleinheiten auf. Erfindungsgemäß wird unter mehreren Bilderfassungseinzeleinheiten verstanden, dass mindestens zwei Bilderfassungseinzeleinheiten vorliegen. Vorzugsweise handelt es sich jedoch mindestens um drei oder um eine höhere Anzahl von Bilderfassungseinzeleinheiten.

Die Bilderfassungseinzeleinheiten weisen jeweils eine Lichtstrahlungsquelle und eine Bildkamera auf. Die Lichtstrahlungsquelle und die Bildkamera weisen ein aufeinander abgestimmtes Wellenlängenarbeitsspektrum auf. Dies bedeutet, dass sich das Emissionsspektrum der Lichtstrahlungsquelle und das Aufnahmespektrum der Bildkamera zumindest teilweise überdecken. Das Wellenlängenarbeitsspektrum der mehreren Bilderfassungseinzeleinheiten unterscheidet sich dabei voneinander.

Vorzugsweise weist die optische Bilderfassungseinheit eine Bilderfassungseinzeleinheit im Infrarot-Wellenlängenbereich (nachfolgend auch verkürzt IR genannt), eine Bilderfassungseinzeleinheit im sichtbaren Wellenlängenbereich und eine Bilderfassungseinheit im Ultraviolett-Wellenlängenbereich (nachfolgend auch verkürzt UV genannt) auf. Es können aber auch weitere Bilderfassungseinheiten in weiteren Wellenlängenbereichen vorhanden sein. Als sichtbares Licht wird der Wellenlängenbereich von 380 nm bis 780 nm verstanden. Als IR wird der Wellenlängenbereich über 780 nm und als UV der Wellenlängenbereich unter 380 nm verstanden.

Bei der Lichtstrahlungsquelle kann es sich vorzugsweise um eine LED handeln, welche vorteilhaft ein präzise bestimmbares und engbandiges Emissionsspektrum aufweist. Das von der Fahrzeugoberfläche reflektierte Spektrum ist sowohl abhängig von den Eigenschaften der Fahrzeugoberfläche als auch von dem durch die Lichtstrahlungsquelle beaufschlagten Spektrum. Durch ein exakt definierbares Emissionsspektrum kann auf der Basis des erhaltenen reflektierten Spektrums eine hohe Analysequalität in Bezug auf die Eigenschaften der Fahrzeugoberfläche erzielt werden.

Das reflektierte Spektrum wird von der zugehörigen Bildkamera als Bildaufnahme aufgenommen, wobei die zugehörige Bildkamera in ihrem Arbeitsspektrum auf das Emissionsspektrum der Lichtstrahlungsquelle abgestimmt ist.

Erfindungsgemäß unterscheiden sich die Wellenlängenarbeitsspektren der mehreren Bilderfassungseinzeleinheiten voneinander. Dies bedeutet, dass die Lichtstrahlungsquelle der jeweiligen Bilderfassungseinzeleinheiten unterschiedliche Emissionsspektren aufweisen und dass die Bildkameras ebenfalls unterschiedliche Arbeitsspektren aufweisen, wobei das Arbeitsspektrum einer jeden Bildkamera auf die jeweils zugeordnete Lichtstrahlungsquelle abgestimmt ist.

Durch die unterschiedlichen Wellenlängenarbeitsspektren werden von ein und demselben Objektpunkt der Fahrzeugoberfläche unterschiedliche reflektierte Spektren erhalten, die in den jeweiligen Bildaufnahmen für eine Analyse zur Verfügung stehen.

Weiterhin ist erfindungsgemäß jede der Bilderfassungseinzeleinheiten dafür ausgebildet, mehrere unterschiedliche Strahlungsenergieniveaus der Lichtstrahlungsquelle aufzuweisen. Als mehrere unterschiedliche Stahlungsenergieniveaus werden vorzugsweise mindestens zwei unterschiedliche Strahlungsenergieniveaus verstanden. Hierbei ist es von der Erfindung in gleicher Weise erfasst, dass die Lichtstrahlungsquelle mit unterschiedlicher Leistung beaufschlagt wird und so mit einem unterschiedlich hohen Lichtstrom leuchtet, als auch dass beispielsweise eine Lichtstrahlungsquelle eine Mehrzahl von LED aufweist, wobei je nach einzustellendem Strahlungsenergieniveau eine unterschiedliche Anzahl von LED zugeschaltet wird. Ebenfalls umfasst sind lichtlenkenden Einrichtungen, beispielsweise durch Linsen oder Blenden. Maßgeblich ist das auf den jeweiligen Erfassungsbereich der Fahrzeugoberfläche jeweils applizierte unterschiedlich hohe Strahlungsenergieniveau.

Besonders bevorzugt wird das jeweilige Strahlungsenergieniveau durch die Auswertungseinheit festgelegt. Nach diesem Aspekt der Erfindung erhält die Lichtstrahlungsquelle hierzu ein Steuersignal von der Auswertungseinheit, welches über eine separate Verbindung oder optional auch über die ohnehin bestehende Datenverbindung zwischen der jeweiligen Bilderfassungseinzeleinheit und der Auswertungseinheit übertragen werden kann.

Alle Bilderfassungseinzeleinheiten stellen unmittelbar Flächenkoordinaten und mittelbar über die Einbeziehung von Plattformpositionsdaten Raumkoordinatendaten von Objektpunkten der Fahrzeugoberfläche bereit. Die Raumkoordinatendaten aller Bilderfassungseinzeleinheiten der optischen Bilderfassungseinheit sind auf ein und dasselbe Raumkoordinatensystem bezogen. Hierzu werden die Bilderfassungseinzeleinheiten in dasselbe Raumkoordinatensystem kalibriert. Dieses wird nachfolgend auch als das einheitliche Raumkoordinatensystem bezeichnet.

Jede Bilderfassungseinzeleinheit weist einen Bilderfassungsbereich auf. Der Bilderfassungsbereich umfasst zumindest abschnittsweise die Oberfläche des Fahrzeugs. Die Bilderfassungsbereiche der Bilderfassungseinzeleinheiten überlagern sich und bilden einen gemeinsamen Bilderfassungsbereich aus. Die Plattform ist so positioniert, dass sich ein aufgestelltes Fahrzeug zumindest abschnittsweise in dem gemeinsamen Bilderfassungsbereich befindet.

Mittels der Fahrzeugpositionierungseinheit wird das Fahrzeug gedreht. Dabei erfolgt eine sequentielle Durchführung von Erfassungsvorgängen, so dass Erfassungen in einer Vielzahl unterschiedlicher Winkelstellungen der Plattform und damit des Fahrzeugs, nachfolgend auch Erfassungswinkel genannt, durchgeführt werden.

Dabei stellt jede Bildaufnahme eine Einzelerfassung dar. Die unterschiedlichen Einzelerfassungen erfolgen somit bezogen auf einen bestimmten Objektpunkt erstens durch unterschiedliche Bilderfassungseinzeleinheiten und somit in unterschiedlichen Wellenlängenarbeitsspektren, zweitens durch ein und dieselbe Bilderfassungseinzeleinheit mit unterschiedlichen Strahlungsenergieniveaus und drittens mit unterschiedlichen Erfassungswinkeln.

Damit wird ein dreidimensionaler Raum von Wellenlängenarbeitsspektrum, Strahlungsenergieniveau und Erfassungswinkel aufgespannt, in die sich die Einzelerfassungen einordnen.

Ferner weist die Bilderfassungseinheit eine Positionierungseinheit auf. Die Positionierungseinheit stellt eine feste Lagebeziehung der Bilderfassungseinzeleinheiten zueinander sowie der Bilderfassungseinzeleinheiten zu der Fahrzeugpositionierungseinheit her. Es handelt sich vorzugsweise um ein Gestell oder einen Rahmen. Die Positionierungseinheit kann auch durch eine Umhausung ausgebildet sein.

Vorzugsweise sind ferner Markierungen in dem gemeinsamen Bilderfassungsbereich angeordnet, um ein Kalibrieren der Bilderfassungseinzeleinheiten in dasselbe einheitliche Raumkoordinatensystem zu ermöglichen. Vorzugsweise sind die Markierungen an der Innenseite einer Umhausung angebracht.

Erfindungsgemäß ist jede der Bilderfassungseinzeleinheiten ferner dadurch gekennzeichnet, dass Bildpunktdaten von Objektpunkten des Fahrzeugs in einer Bildaufnahme erfassbar und an die Auswertungseinheit übertragbar bereitstellbar sind. Die Bilderfassungseinheiten sind so ausgebildet, dass die mittels der Bildaufnahme erhaltenen Bildpunktdaten zum einen Koordinatendaten der Objektpunkte und zum zweiten wellenlängenbezogene und strahlungsenergieniveaubezogene Lichtintensitätswertdaten aufweisen. Die Bildpunktdaten eines Objektpunktes werden vorzugsweise als Datentupel zusammengefasst (x, y, g) und weiterverarbeitet.

Die Koordinatendaten liegen als Flächenkoordinatendaten (x, y) vor. Sie können von der Auswertungseinheit dann den Raumkoordinaten des gemeinsamen Raumkoordinatensystems zugeordnet werden.

Als wellenlängenbezogene Lichtintensitätswertdaten im Sinne der vorliegenden Erfindung wird verstanden, dass die Lichtintensitätswertdaten der Bildaufnahmen der Bildkameras unterschiedlicher Bilderfassungseinzeleinheiten durch die jeweiligen Wellenlängenarbeitsspektren bestimmt sind. Somit können sich die Lichtintensitätswertdaten aus den unterschiedlichen Bilderfassungseinzeleinheiten zu ein und demselben Objektpunkt unterscheiden.

Als strahlungsenergieniveaubezogene Lichtintensitätswertdaten im Sinne der vorliegenden Erfindung wird verstanden, dass die Lichtintensitätswertdaten der Bildaufnahmen der Bildkameras gleicher Bilderfassungseinzeleinheiten durch das applizierte Strahlungsenergieniveau bestimmt sind. Die Lichtintensitätswertdaten aus den unterschiedlichen Bildaufnahmen derselben Bilderfassungseinzeleinheiten zu ein und demselben Objektpunkt unterscheiden sich zwar erwartungsgemäß bei unterschiedlichen Strahlungsenergieniveaus.

Überraschend wurde jedoch gefunden, dass die strahlungsenergieniveaubedingten Unterschiede je nach Unterschieden der Strahlungsenergieniveaus und je nach Unterschieden der Wellenlängenarbeitsspektren unterschiedlich korrelieren und dass diese unterschiedlichen Korrelationen eine genauere Analyse der Oberfläche des Fahrzeugs ermöglichen.

Erfindungsgemäß weist die Auswertungseinheit ein Differenzwerteerzeugungsmodul, ein Differenzwertebewertungsmodul, ein Gesamtbewertungsmodul sowie ein Generierungsmodul auf. Physisch ist die Auswertungseinheit vorzugsweise als ein Computer mit Computerprogrammen ausgebildet.

Die Auswertungseinheit erhält die Bildpunktdaten von der optischen Bilderfassungseinheit sowie die Plattformpositionsdaten von der Fahrzeugpositionierungseinheit.

Das Differenzwerterzeugungsmodul erzeugt Differenzwertdaten aus den unterschiedlichen Lichtwertintensitätswertdaten.

Hierzu ist das Differenzwertmodul ausgebildet, die Lichtintensitätswertdaten der Bildaufnahme für einen Objektpunkt mittels der zugehörigen Koordinatendaten den Lichtintensitätswertdaten mindestens einer weiteren Bildaufnahme für denselben Objektpunkt zuzuordnen. Somit werden beispielsweise das Datentupel (x, y, g1) einer ersten Bildaufnahme und das Datentupel (x, y, g2) einer zweiten Bildaufnahme zu einem Datentupel (x, y, g1, g2) zusammengefasst.

Hierbei kann die Zuordnung insbesondere auf solche Bildaufnahmen von unterschiedlichen Bilderfassungseinzeleinheiten bezogen sein, die mit gleichem Strahlungsenergieniveau aufgenommen wurden. In diesem Fall beruhen die Bildaufnahmen auf unterschiedlichen Wellenlängenarbeitsspektren.

Ferner kann die Zuordnung von solchen Bildaufnahmen von ein und der derselben Bilderfassungseinzeleinheit erfolgen, die mit unterschiedlichen Strahlungsenergieniveaus aufgenommen wurden.

Es sind jedoch auch Zuordnungen solcher Bildaufnahmen möglich, bei denen sowohl unterschiedliche Wellenlängenarbeitsspektren als auch unterschiedliche Strahlungsenergieniveaus vorliegen.

Weiterhin sind Zuordnungen solcher Bildaufnahmen möglich, bei denen gleiche Wellenlängenarbeitsspektren, gleiche Strahlungsenergieniveaus aber unterschiedliche Erfassungswinkel vorliegen.

Letztlich sind Zuordnungen in allen Kombinationen aus den Wellenlängenarbeitsspektren, Strahlungsenergieniveaus und Erfassungswinkeln möglich.

Zudem ist es möglich, dass eine mehrfache Zuordnung in dem Sinne erfolgt, dass beispielsweise eine erste Bildaufnahme in einer ersten Zuordnung einer weiteren Bildaufnahme, die von derselben Bilderfassungseinzeleinheit aber mit einem abweichenden Strahlungsenergieniveau aufgenommen, zugeordnet wird und dass dann dieselbe erste Bildaufnahme in einer zweiten Zuordnung einer weiteren Bildaufnahme einer anderen Bilderfassungseinzeleinheit zugeordnet wird.

Ferner ist das Differenzwerteerzeugungsmodul ausgebildet, nach erfolgter Zuordnung in einem Lichtintensitätswertdatenvergleich die Lichtintensitätswertdaten zu vergleichen und hieraus Differenzwertdaten zu erzeugen, sowie die Differenzwertdaten für das Differenzwertbewertungsmodul bereitzustellen. Aus jeder Zuordnung können so Differenzwertdaten bereitgestellt werden.

Insbesondere bei mehrfachen Zuordnungen sind somit eine Vielzahl von Differenzwertdaten bereitstellbar.

Das Differenzwertbewertungsmodul ist ausgebildet, eine Bewertung einer Datenqualität der Differenzwertdaten durchzuführen. Auf der Grundlage der Bewertung erfolgt eine Kategorisierung dieser Differenzwertdaten anhand eines einstellbaren Qualitätswertes. Erreichen die Differenzwertdaten den einstellbaren Qualitätswert der Datenqualität, erfolgt eine Kategorisierung als verwertbare Differenzwertdaten. Unterschreiten die Differenzwertdaten den Qualitätswert, erfolgt eine Kategorisierung als nicht verwertbare Differenzwertdaten. Der einstellbare Qualitätswert kann beispielsweise durch zulässige Abweichungen von Differenzwerten von benachbarten Objektpunkten festgelegt werden.

Die Differenzwerteerzeugung und Differenzwertebewertung erfolgen bezogen auf jeden herangezogenen Objektpunkt und für jede Bildaufnahme der unterschiedlichen Bilderfassungseinzeleinheiten.

Das Differenzwerteerzeugungsmodul und das Differenzwertebewertungsmodul führen eine Vielzahl von Differenzwertbewertungen durch. Es ist möglich, dass das Differenzwerterzeugungsmodul und das Differenzwertbewertungsmodul jeweils mehrfach ausgebildet sind. Dabei ist es sowohl möglich, dass die Differenzwerterzeugungsmodulelemente und die Differenzwertbewertungsmodulelemente die Bildpunktdaten aus den Bildaufnahmen parallel verarbeiten, als auch dass eine sequentielle Abarbeitung durch ein und dasselbe Modul oder Modulelement mit nachfolgender Zwischenspeicherung erfolgt.

Insbesondere ist es bei einer Zuordnung von Bildaufnahmen mit unterschiedlichen Strahlungsenergieniveaus aus ein und derselben Bilderfassungseinzeleinheit vorteilhaft möglich, jeweils ein solches Differenzwerteerzeugungsmodulelement oder ein Differenzwertebewertungsmodulelement einer Bilderfassungseinzeleinheit zuzuordnen.

Die verwertbaren Differenzwertdaten aus der vorbeschriebenen Erfassung zu diesem bestimmten Objektpunkt, der Differenzwerteerzeugung und der nachfolgenden Differenzwertebewertung werden an das Gesamtbewertungsmodul übertragen und bilden die Grundlage für eine Gesamtbewertung aus allen verwertbaren Differenzwertdaten zu diesem Objektpunkt

Durch das Gesamtbewertungsmodul werden anhand der Koordinatendaten zu den Objektpunkten die verwertbaren Differenzwertdaten aus dem Differenzwertbewertungsmodule und damit aus den Bilderfassungseinzeleinheiten einander zugeordnet.

Das Gesamtbewertungsmodul ist so ausgebildet, dass ein Vergleich des Qualitätswertes der verwertbaren Differenzwertdaten einer Differenzwerterzeugung mit dem Qualitätswert der verwertbaren Differenzwertdaten einer weiteren Differenzwerterzeugung durchführbar ist. Auf dieser Grundlage ist eine objektpunktbezogene Gewichtung, beispielsweise als Rangkategorisierung, der verwertbaren Differenzwertdaten der Differenzwerterzeugungen in Abhängigkeit von dem Qualitätswert durchführbar. Beispielsweise ist es möglich, gemäß der Rangkategorisierung den Differenzwertdaten einen Gewichtungsfaktor zuzuordnen. Die Differenzwertdaten zu einem bestimmten Objektpunkt mit dem höchsten Qualitätswert erhalten beispielsweise den höchsten Gewichtungsfaktor. Differenzwertdaten zu diesem bestimmten Objektpunkt mit einem niedrigeren Qualitätswert erhalten lediglich einen niedrigen Gewichtungsfaktor. Der Gewichtungsfaktor kann für die nachfolgende Verarbeitung herangezogen werden und insbesondere mitbestimmen, wie die unterschiedlichen gewichteten Differenzwertdaten zu ein und demselben Objektpunkt in Beziehung gesetzt werden. Die gewichteten Differenzwertdaten werden dem Generierungsmodul übertragbar zur Verfügung gestellt.

Der Gewichtung liegt also eine Bewertung der Qualität der Differenzwertdaten anhand des Qualitätswerts zu Grunde. Die Bewertung der Qualität kann absolut oder relativ zu der erfassten Datenqualität der Differenzwertdaten erfolgen. Dabei sind neben diskreten Algorithmen auch Algorithmen verwendbar, die eine "n - zu - n" Relation in die Qualitätsbewertung mit einbeziehen. Damit ist es beispielsweise möglich, bei einer geringen Qualität der Differenzwertdaten aus einer Differenzwerterzeugung aus Einzelerfassungen aus einem Erfassungswinkel durch die Nutzung der Differenzwertdaten aus Differenzwerterzeugungen aus Einzelerfassungen aus mehreren Erfassungswinkeln oder bei einer geringen Qualität der Differenzwertdaten aus einer Differenzwerterzeugung aus Einzelerfassungen in einem Strahlungsenergieniveau durch die Nutzung der Differenzwertdaten aus Differenzwerterzeugungen aus mehreren unterschiedlichen Strahlungsenergieniveaus jeweils zu demselben Objektpunkt die resultierende Qualität der Analyse zu erhöhen.

Ferner kann durch das Gesamtbewertungsmodul eine Plausibilitätskontrolle erfolgen. Soweit mindestens drei gewichtete Differenzwertdaten zu ein und demselben Objektpunkt vorhanden sind, kann das Gesamtbewertungsmodul einen Vergleich der zu einem bestimmten Objektpunkt vorliegenden gewichteten Differenzwertdaten durchführen und so ausgebildet sein, das ab einem einstellbaren Abweichungsgrad der ersten gewichteten Differenzwertdaten von den zweiten und dritten gewichteten Differenzwertdaten die ersten gewichteten Differenzwertdaten verworfen und nicht weiter dem Generierungsmodul übertragbar zur Verfügung gestellt werden.

Das Generierungsmodul ist so ausgebildet, dass es die Koordinatendaten aus den gewichteten Differenzwertdaten der Bilderfassungseinzeleinheiten unter Einbeziehung der Plattformpositionsdaten einem einheitlichen Raumkoordinatensystem zuordnet. Bei unterschiedlichen Winkelstellungen der Plattform liegen unterschiedliche Koordinatendaten der gewichteten Differenzwertdaten ein und desselben Objektpunktes des Fahrzeugs vor. Trotzdem kann eine eindeutige Zuordnung aller gewichteten Differenzwertdaten, die sich auf ein und denselben Objektpunkt beziehen, auf diesen Objektpunkt erfolgen, da der Auswertungseinheit zusätzlich die Plattformkoordinatendaten bekannt sind.

Auf dieser Grundlage wird zunächst ein digitales Oberflächenkonturabbild des Fahrzeugs in dem einheitlichen Raumkoordinatensystem erzeugt.

Das so erzeugte digitale Oberflächenkonturabbild beruht zunächst nur auf den Koordinatendaten.

Das digitale Oberflächenkonturabbild des Fahrzeugs wird von dem Generierungsmodul nun durch Hinzufügung der weiteren Daten aus den gewichteten Differenzwertdaten anhand der Koordinatendaten zu einem digitalen Oberflächenbeschaffenheitsabbild des Fahrzeugs ergänzt. Bei den weiteren gewichteten Differenzwertdaten handelt es sich um die Daten aus den Datentupeln, die nicht Koordinatendaten sind, also insbesondere um Daten zu den Differenzen der Lichtintensitätswerte, Daten zur Gewichtung, Daten zu Wellenlängen und Strahlungsenergieniveaus und so weiter.

Das digitale Oberflächenbeschaffenheitsabbild wird ausgebbar bereitgestellt.

Das digitale Oberflächenbeschaffenheitsabbild stellt als besonderen Vorteil umfassende Informationen zum Gesamtzustand, zu Beschädigungen und früheren Ausbesserungen und Reparaturen bezogen auf die Fahrzeugoberfläche bereit.

Insbesondere stellt es Informationen zu folgenden Eigenschaften der Oberfläche des Fahrzeugs bereit:
- Bestimmung des relativen Alters des Lacks einer lackierten Oberfläche
- Bestimmung der Dicke einer Klarlackschicht
- visualisierte Darstellung von Fehlstellen und Unregelmäßigkeiten einer lackierten Oberfläche
- Erkennung von Kratzern oder Beschädigungen an einer Lackoberfläche und in darunter liegenden Schichten
- Bestimmung der UV-Durchlässigkeit von Glasflächen
- Bewertung des Alterungszustands von Plastikoberflächen
- Erkennung von Bruchstellen und Rissen von Plastikoberflächen
- Erkennung von Farbunterschieden bei lackierten Oberflächen
- Bestimmung des Glanzgrades und der Glätte und Oberflächengüte bei lackierten Oberflächen

Ein weiterer Vorteil liegt in der berührungslosen Bestimmung der Eigenschaften unter Bedingungen, bei der alle möglicherweise störenden oder verfälschenden Einflüsse ausgeschlossen werden können.

Das Fahrzeugoberflächenanalysesystem ermöglicht als besonderen Vorteil die Erzeugung eines einheitlichen digitalen Oberflächenbeschaffenheitsabbilds eines Fahrzeugs auf der Basis von mehreren unterschiedlichen Bilderfassungseinzeleinheiten.

Es stehen zu jeweils ein und demselben Objektpunkt Bildpunktdaten aus Einzelerfassungen unterschiedlicher Bilderfassungseinzeleinheiten zur Verfügung.

Obwohl der Fachmann geneigt ist, durch die Kumulation einer großen Datenbasis die Aussagekraft eines Analyseergebnisses zu erhöhen, wurde überraschend gefunden, dass im Gegenteil durch die Bestimmung von Differenzwerten aus der erhobenen Datenbasis und damit zunächst einer Reduktion der Datenbasis eine Verbesserung der Qualität des Analyseergebnisses erzielbar ist.

Vorteilhaft ist weiterhin insbesondere Folgendes:
Erstens können sich vorteilhaft die Bilderfassungseinzeleinheiten wechselseitig unterstützen. Beispielsweise können Bildaufnahmen in einem bestimmten Wellenlängenbereich für bestimmte Abschnitte der Fahrzeugoberfläche eine hohe Aussagequalität bereitstellen, für andere Abschnitte jedoch nicht, während für diese anderen Abschnitte umgekehrt Bildaufnahmen mit einem anderen Wellenlängenbereich eine besonders hohe Aussagequalität bereitstellen.

Zweitens ist es vorteilhaft, dass das Fahrzeugoberflächenanalysesystem die Qualität und damit die Verwertungseignung der Bildpunktdaten aus unterschiedlichen Bildaufnahmen selbstständig erkennt und jeweils die Bildpunktdaten verwendet, die eine höhere Qualität des digitalen Oberflächenbeschaffenheitsabbilds zur Verfügung stellen.

Drittens werden vorteilhaft zunächst die Bildpunktdaten in subtraktive Zuordnung gesetzt, indem Differenzwerte erzeugt werden. Nachfolgend erfolgt dann eine kumulative Zuordnung der Differenzwerte zur weiteren Verbesserung der Qualität des Analyseergebnisses.

Ferner ermöglicht das digitale Oberflächenbeschaffenheitsabbild es als weiteren Vorteil, das Fahrzeug in verschiedenen Ansichten, beispielsweise mit geschlossenen oder geöffneten Türen sowie in verschiedenen Perspektiven, beispielsweise als 360°-Ansicht, darzustellen.

Ein besonderer Vorteil liegt darin, dass im Ergebnis ein digitales Abbild des Fahrzeugs erlangbar ist, das eine ausreichende Datenbasis insbesondere für folgende zwei wichtige Anwendungen aufweist.

Zum ersten ist das digitale Oberflächenbeschaffenheitsabbild geeignet, um Fahrzeugbeschädigungen zu erfassen und hieraus automatisiert erforderliche Reparaturmaßnahmen unter Spezifizierung benötigter Ersatzteile und erforderlicher Arbeitsschritte sowie daraus abgeleitet der Reparaturkosten zu bestimmen, wobei alles in digitaler Form erfolgen kann. Besonders vorteilhaft ist hierbei, dass insbesondere durch Überlackierung kaschierte Beschädigungen auffindbar und darstellbar sind.

Zum zweiten kann durch Weiterverarbeitung des digitalen Abbilds automatisiert eine Fahrzeugbewertung erfolgen, um beispielsweise einen Fernabsatz von gebrauchten Fahrzeugen zu unterstützen. Bei der Fahrzeugbewertung sind zusätzliche Daten wie Fahrzeugalter, Laufleistung, Anzahl der Vorbesitzer und weitere wertbestimmende Faktoren in die automatisierte Berechnung des Fahrzeugwerts einbeziehbar.

Von besonderem Vorteil sind die Manipulationssicherheit und die zuverlässige Dokumentation einer Fahrzeugbeschädigungserfassung oder einer Fahrzeugbewertung.

Ein weiterer Vorteil liegt in der Modularität des Fahrzeugoberflächenerfassungssystems. Je nach Bedarf, also je nach Qualitätsvorgabe oder nach zu analysierenden Fahrzeugoberflächenarten wie Lackoberflächen, Glasoberflächen oder Plastikteiloberflächen kann das Fahrzeugoberflächenanalysesystem mit unterschiedlichen Bilderfassungseinzeleinheiten versehen werden oder es können gezielt lediglich bestimmte Bilderfassungseinheiten an der Bilderfassung beteiligt werden.

Dem erfindungsgemäßen Fahrzeugoberflächenanalysesystem liegt insbesondere zu Grunde, dass alle Bilderfassungseinzeleinheiten und damit alle Bildaufnahmen, auf ein und dasselbe Koordinatensystem kalibriert sind. Die Bildpunktdaten werden dabei sowohl durch die unterschiedliche Ausbildung der Bilderfassungseinheiten als auch insofern mehrfach erfasst, weil eine Erfassung in unterschiedlichen Winkelpositionen infolge der Drehbewegung des Fahrzeugs auf der Plattform vorgenommen werden kann. Die Qualität aus den erfassten Bildpunktdaten wird erhöht, weil auch unsichere Aussagen aus einer Einzelerfassung durch das Hinzuziehen anderer unsicherer Aussagen aus einer oder mehreren weiteren Einzelerfassungen verwertbar werden.

Das digitale Oberflächenbeschaffenheitsabbild kann vorteilhaft als mehrere Layer dargestellt werden, weshalb dies auch als Multi-Layer-Information bezeichnet werden kann. Jeder Layer beinhaltet Informationen unterschiedlicher Art, beispielsweise in einem Layer zu Oberflächenbeschädigungen und in einem anderen Layer zu verdeckten Ausbesserungen von Vorschäden. Hierdurch erhält der Betrachter oder beispielsweise ein Fahrzeugbewerter mehr Informationen als bei einer lediglich bildlichen Darstellung der Oberfläche des Fahrzeugs.

Das Ergebnis der Fahrzeugoberflächenerfassung wird als digitales Oberflächenbeschaffenheitsabbild mit mehreren Informationsarten bereitgestellt, so dass das digitale Oberflächenbeschaffenheitsabbild ausgebildet ist, einen digitalen Zwilling der Oberfläche des erfassten Fahrzeugs darzustellen.

Das digitale Oberflächenbeschaffenheitsabbild als digitaler Zwilling ermöglicht es darüber hinaus, dass die in ihm aggregierten Informationen automatisiert, beispielsweise für eine Reparaturberechnung, weiterverarbeitet werden können.

Gemäß einer vorteilhaften Weiterbildung weist das Fahrzeugoberflächenanalysesystem eine Umhausung auf. Dabei ist die Fahrzeugpositionierungseinheit innerhalb der Umhausung angeordnet. Die Umhausung bewirkt insbesondere den Vorteil, dass sowohl im sichtbaren als auch nichtsichtbaren Spektrum definierte Lichtverhältnisse bei den Erfassungsvorgängen erreicht werden können und insbesondere Störlichtquellen abgeschirmt werden. Damit kann vorteilhaft die Genauigkeit der erfassten Objektdaten erhöht werden. Zugleich wird die Umgebung und insbesondere das Personal vor Lichtquellen der Bilderfassungseinzeleinheiten geschützt, was insbesondere bei UV-Lichtstrahlungsquellen mit höherem Strahlungsenergieniveau relevant ist. Vorzugsweise kann die Umhausung zugleich ganz oder teilweise die Positionierungseinheit der optischen Bilderfassungseinheit ausbilden und die Lagebeziehung der Bilderfassungseinzeleinheiten festlegen. Vorzugsweise ist hierzu auch die optische Bilderfassungseinheit innerhalb der Umhausung angeordnet.

Nach einer anderen Weiterbildung weist das Fahrzeugerfassungssystem ein Vergleichsmodul auf. Das Vergleichsmodul weist eine Datenbasis mit Daten zu einem normativen digitalen Abbild auf. Die Datenbasis kann als interne Datenbank oder auch als eine externe Datenbank vorliegen. Eine externe Datenbank ermöglicht als zusätzlichen Vorteil eine zentrale Datenpflege. Das normative digitale Abbild beschreibt ein typengleiches Fahrzeug, wie es dem originalen Herstellungszustand entspricht.

Das Vergleichsmodul ist ausgebildet, einen Vergleich zwischen dem digitalen Oberflächenbeschaffenheitsabbild und dem normativen Oberflächenbeschaffenheitsabbild durchzuführen und ein digitales Differenzabbild zu erzeugen. Das digitale Differenzabbild beschreibt, inwiefern der Zustand des Fahrzeugs, dessen Fahrzeugzustand erfasst wird, von dem originalen Herstellungszustand der Fahrzeugoberfläche abweicht. Das digitale Differenzabbild weist somit insbesondere den Alterungsgrad, Beschädigungen und Reparaturen der Oberfläche, also insbesondere Lackausbesserungen sowie Überlackierungen von unter der Oberfläche liegenden Schäden, aus. Somit kann beispielsweise eine Ausgabe als Zustandsbericht erfolgen. Diese Fahrzeugzustandsinformationen können zudem eine Grundlage für Aussagen zu erforderlichen Reparaturen, insbesondere Lackreparaturen, oder zu dem Wert des betreffenden Fahrzeugs sein.

Eine weitere Weiterbildung sieht vor, dass das Fahrzeugerfassungssystem ein Reparaturberechnungsmodul aufweist. Das Reparaturberechnungsmodul weist eine Datenbasis mit Reparaturdaten auf, wobei die Reparaturdaten Daten zu Reparaturarbeitszeiten und zu Reparaturkosten, sowie gegebenenfalls auch Ersatzteilen wie Kunststoffteilen der Fahrzeugoberfläche, aufweisen. Auch diese Datenbasis kann als interne Datenbank oder auch als eine externe Datenbank vorliegen.

Daten zu Ersatzteilen beinhalten, bei welcher Beschädigung welche Ersatzteile für eine Reparatur benötigt werden. Daten zu Reparaturarbeitszeiten beinhalten, welche Reparaturzeiten, in der Regel als Arbeitswerte bezeichnet, für die Durchführung einer Reparatur erforderlich sind. Daten zu Reparaturkosten geben an, zu welchen Preisen Ersatzteile und zu welchen Preisen Reparaturarbeitsleistungen verfügbar sind. Die Reparaturkosten sind in der Datenbasis daher vorzugsweise als Einheitspreise hinterlegt.

Das Reparaturberechnungsmodul ist ausgebildet, auf der Grundlage des digitalen Differenzabbilds und der Reparaturdaten eine Reparaturbewertung zu erstellen, wobei die Reparaturbewertung für eine Reparatur benötigte Ersatzteile, aufzuwendende Reparaturarbeitszeiten und Reparaturkosten aufweist.

Mittels dieser Weiterbildung ist es vorteilhaft möglich, automatisiert und manipulationssicher Aussagen zu erforderlichen Reparaturen und zu deren Kosten zu erlangen. Somit können automatisiert Kostenvoranschläge erstellt werden. Als Vorteil können somit erhebliche Personalkosten eingespart werden.

In einer vorteilhaften Weiterbildung hierzu ist es ferner möglich, auf der Grundlage der Reparaturbewertung automatisch Ersatzteilbestellungen auszulösen.

Nach einer weiteren Weiterbildung weist das Fahrzeugerfassungssystem ein Wertermittlungsmodul auf. Das Wertermittlungsmodul weist eine Datenbasis mit Fahrzeugpreisdaten auf. Es gilt auch hier, dass diese Datenbasis als interne Datenbank oder auch als eine externe Datenbank vorliegen kann.

Als Fahrzeugpreisdaten werden beispielsweise Listenpreise je nach Fahrzeugkonfiguration, Preistabellen in Abhängigkeit von Fahrzeugalter, Laufleistung, Anzahl der Vorbesitzer und etwaige zusätzliche Preisdaten verstanden.

Das Wertermittlungsmodul ist ausgebildet, auf der Grundlage der Fahrzeugpreisdaten des digitalen Oberflächenzustandsabbilds, des digitalen Differenzabbilds und der Reparaturdaten eine Wertermittlung zu erstellen. Hierbei kann es sich vorzugsweise um einen auf dem Oberflächenzustand beruhenden Wertminderungs- oder Werterhöhungsbetrag handeln der ausdrückt, in welchem Maße der Oberflächenzustand des Fahrzeugs bezogen auf das Alter des Fahrzeugs über oder unter dem Durchschnitt von vergleichbaren Fahrzeugen liegt. Gemäß dieser Weiterbildung steht vorteilhaft eine Lösung zur Unterstützung der Bestimmung eines Handelswertes eines Fahrzeugs zur Verfügung, die automatisiert erfolgt und damit nur geringen Arbeitsaufwand erfordert, manipulationssicher ist und zuverlässig dokumentierbar ist.

Die Erfindung wird als Ausführungsbeispiel anhand von
- Fig. 1: Schematische Darstellung in Draufsicht
- Fig. 2: Schematisches Diagramm zu Bildaufnahmen aus Erfassungsvorgängen
- Fig. 3: Blockschaltbild mit Reparaturberechnungsmodul und Wertermittlungsmodul
näher erläutert.

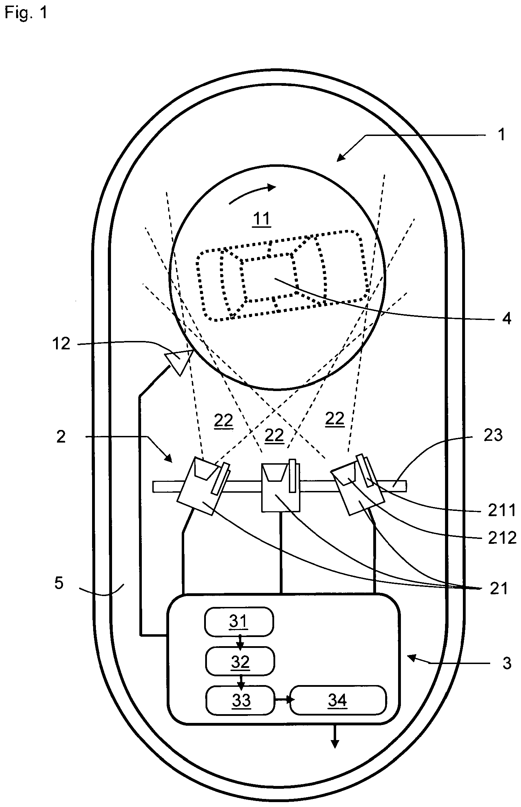

Fig. 1 zeigt in einer schematischen Darstellung ein erstes Ausführungsbeispiel des Fahrzeugoberflächenanalysesystems.

Das Fahrzeug 4 ist mittels einer Fahrzeugpositionierungseinheit relativ zu der optischen Bilderfassungseinheit 2 in seiner Lagebeziehung festlegbar. Hierzu weist die Fahrzeugpositionierungseinheit 1 eine drehbare Plattform 11 auf. Auf diese kann bestimmungsgemäß das Fahrzeug 4 aufgefahren werden. Der Pfeil veranschaulicht die Drehbarkeit der Plattform 11. Ein weiteres Element der Fahrzeugpositionierungseinheit 1 ist die Plattformpositionserfassungseinheit 12. Sie erfasst die Drehposition und damit die Winkelstellung der Plattform 11 und überträgt diese an die Auswertungseinheit 3 mittels einer drahtgebundenen Datenverbindung.

Fig. 1 zeigt ferner die optische Bilderfassungseinheit 2. Diese weist im vorliegenden Ausführungsbeispiel drei Bilderfassungseinzeleinheiten 21 auf. Jede der Bilderfassungseinzeleinheit weist eine Lichtstrahlungsquelle 211 und eine Bildkamera 212 auf.

Im Ausführungsbeispiel ist eine erste der drei Bilderfassungseinzeleinheiten 21 mit einer Infrarot-Lichtstrahlungsquelle und einer Infrarot-Bildkamera, eine zweite der drei Bilderfassungseinzeleinheiten 21 mit einer Lichtstrahlungsquelle und einer Bildkamera jeweils im sichtbaren Lichtwellenlängenbereich und eine dritte der drei Bilderfassungseinzeleinheiten 21 mit einer Ultraviolett-Lichtstrahlungsquelle und einer Ultraviolett-Kamera ausgebildet.

Der Bilderfassungsbereich 22 jeder Bilderfassungseinzeleinheit 21 ist so ausgerichtet, dass das auf der Plattform 11 befindliche Fahrzeug 4 davon erfasst wird. Im Ausführungsbeispiel überschneiden sich die Bilderfassungsbereiche 22.

Die Positionierungseinheit 23 ist im Ausführungsbeispiel als ein Gestell ausgebildet. Hieran sind die Bilderfassungseinzeleinheiten 21 starr montiert und so in ihrer Lagebeziehung zueinander sowie zu der Plattform 11 festgelegt. Diese Ausbildung ermöglicht es, dass nach erfolgter Kalibrierung alle von den Bilderfassungseinzeleinheiten 21 erfassten Bildpunkdaten zu Objektpunkten des Fahrzeugs einem einheitlichen Raumkoordinatensystem zuordenbar sind.

In dem Ausführungsbeispiel nach Fig. 1 weist das Fahrzeugoberflächenanalysesystem eine Umhausung 2 auf, welche für die Wellenlängenbereiche aller drei Bilderfassungseinzeleinheiten undurchlässig ausgebildet ist. Insbesondere die Fahrzeugpositionierungseinheit 1 als auch die optische Bilderfassungseinheit 2 sind in dem Innenraum der Umhausung 5 angeordnet. Diese weist eine verschließbare Öffnung (in Fig. 1 nicht dargestellt) auf, durch welche das Fahrzeug 4 in den Innenraum auf die Plattform 11 gefahren und nach erfolgter Erfassung wieder herausgefahren werden kann.

Fig. 1 zeigt ferner die Auswertungseinheit 3 auf bei der es sich im Ausführungsbeispiel um ein Computersystem aus einem Rechner mit einer Software handelt.

Die Auswertungseinheit 3 ist über Datenverbindungen mit den drei Bilderfassungseinzeleinheiten 21 verbunden und erhält von dort die Bildpunktdaten der Objektpunkte der Fahrzeugoberfläche des Fahrzeugs 4 aus Bildaufnahmen, auch Einzelerfassungen genannt. (Die Datenverbindungen zur Auswertungseinheit 3 von den Bilderfassungseinzeleinheiten 21 und von der Plattformpositionserfassungseinheit 12 sind ohne Bezugszeichen dargestellt.)

Die Auswertungseinheit 3 weist gemäß Fig. 1 ein Differenzwerteerzeugungsmodul 31, ein Differenzwertebewertungsmodul 32, ein Gesamtbewertungsmodul 33 sowie ein Generierungsmodul 34 auf.

Mittels des Differenzwerteerzeugungsmoduls 31 erfolgt eine Zuordnung der einzelnen Bildaufnahmen. Im vorliegenden Ausführungsbeispiel liegen von jeder Bilderfassungseinzeleinheit 21 mehrere Bildaufnahmen vor, die mit jeweils unterschiedlichen Strahlungsenergieniveaus aufgenommen wurden. Gemäß dem ersten Ausführungsbeispiel ist das Differenzwerteerzeugungsmodul 31 so ausgebildet, dass eine Zuordnung der Bildaufnahmen der unterschiedlichen Bilderfassungseinzeleinheiten 21, also mit unterschiedlichen Wellenlängenarbeitsspektren aber jeweils gleichem Strahlungsenergieniveau erfolgt und dass aus jeder Zuordnung die Differenz der Lichtintensitätswerte ermittelt und als Differenzwert bereitgestellt wird.

Das Differenzwertebewertungsmodul 32 erhält die Differenzwerte von dem Differenzwerteerzeugungsmodul 31 und ist zur Durchführung einer Bewertung der Datenqualität der Differenzwerte ausgebildet. Jeder der erhaltenen Differenzwerte wird anhand eines Vergleichs mit Differenzwerten zu benachbarten Objektpunkten danach bewertet, ob es sich um eine plausiblen Differenzwert handelt. Ein Differenzwert, der dieses Kriterium erfüllt wird im vorliegenden Ausführungsbeispiel als verwertbar kategorisiert und als verwertbarer Differenzwert an das Gesamtbewertungsmodul 33 weitergeleitet. Anderenfalls wird der Differenzwert als nicht verwertbar kategorisiert und damit verworfen und nicht weitergeleitet. Auf diese Weise werden alle erhaltenen Differenzwerte aufeinanderfolgend von dem Differenzwertebewertungsmodul 32 verarbeitet.

Das Differenzwertebewertungsmodul 32 stellt somit das Merkmal bereit, dass ausschließlich ausreichend zuverlässige Daten in das später zu bildende Oberflächenbeschaffenheitsabbild des Fahrzeugs eingehen, so dass auch das Oberflächenbeschaffenheitsabbild einen hohen Zuverlässigkeitsgrad aufweist.

In dem Gesamtbewertungsmodul 33 werden anhand der Koordinatendaten zu den Objektpunkten die von dem Differenzwertebewertungsmodul 32 erhaltenen verwertbaren Differenzwertdaten einander zugeordnet und in Beziehung zueinander bewertet.

Die Zuordnung der verwertbaren Differenzwertdaten als einem selben Objektpunkt zugehörig beruht darauf, dass der Auswertungseinheit 3 durch die definierte Position der Bilderfassungseinzeleinheiten 21 aufgrund deren Lagefestlegung durch die Positionierungseinheit 23 sowie mittels der Plattformpositionserfassungseinheit 12 bekannten Winkelposition der Plattform 11 und damit des aufgestellten Fahrzeugs 4 eine Zuordnung zu einem einheitlichen Raumkoordinatensystem für alle Bilderfassungseinzeleinheiten 21 möglich ist.

Nach erfolgter Zuordnung wird durch das Gesamtbewertungsmodul 33 im vorliegenden Ausführungsbeispiel ein Vergleich des Qualitätswertes der verwertbaren Differenzwertdaten durchgeführt. Im Ergebnis das Vergleichs werden die verglichenen verwertbaren Differenzwertdaten beispielsweise nach dem Rang des Qualitätswertes geordnet und diesen ein Gewichtungsfaktor zugeordnet. Die verwertbaren Differenzwertdaten mit dem höchsten Qualitätswert erhalten dabei den höchsten Gewichtungsfaktor und umgekehrt. Der Gewichtungsfaktor entspricht dem Qualitätswert. Die verwertbaren Differenzwertdaten zu jedem erfassten Objektpunkt werden zusammen mit dem Gewichtungsfaktor für das Generierungsmodul 34 bereitgestellt.

Das Generierungsmodul 34 ordnet die Koordinatendaten aus den verwertbaren Differenzwertdaten unter Einbeziehung der Plattformpositionsdaten dem einheitlichen Raumkoordinatensystem zu.

Auf der Grundlage der Koordinatendaten wird zunächst ein digitales Oberflächenkonturabbild des Fahrzeugs 4 in dem einheitlichen Raumkoordinatensystem erzeugt. Das digitale Oberflächenkonturabbild wird durch eine Punktewolke gebildet, die der Geometrie der Fahrzeugoberfläche entspricht.

Anschließend werden die weiteren Daten aus den gewichteten Differenzwertdaten anhand der Koordinatendaten dem digitale Oberflächenkonturabbild des Fahrzeugs 4 hinzugefügt und so ein digitales Oberflächenbeschaffenheitsabbild des Fahrzeugs 4 erzeugt.

Dieses digitale Oberflächenbeschaffenheitsabbild wird dann ausgebbar bereitgestellt. Im Ausführungsbeispiel wird das digitale Abbild als Datei übertragen. Das digitale Oberflächenbeschaffenheitsabbild kann in einem Monitor als einer Datenausgabeeinheit zudem visualisiert werden. Das digitale Oberflächenbeschaffenheitsabbild geht jedoch über die bloße Visualisierung hinaus. Insbesondere ist es in dem Ausführungsbeispiel möglich, die Visualisierung nach bestimmten Analysekriterien wie beispielsweise Lackdicke, Lackalter oder überdeckten Korrosionsstellen einzustellen. Die Visualisierung kann dabei je nach Analysekriterium so eingestellt werden, dass sie von dem optischen Eindruck abweicht und die graduelle Ausbildung der Analysekriterien farblich hervorhebt.

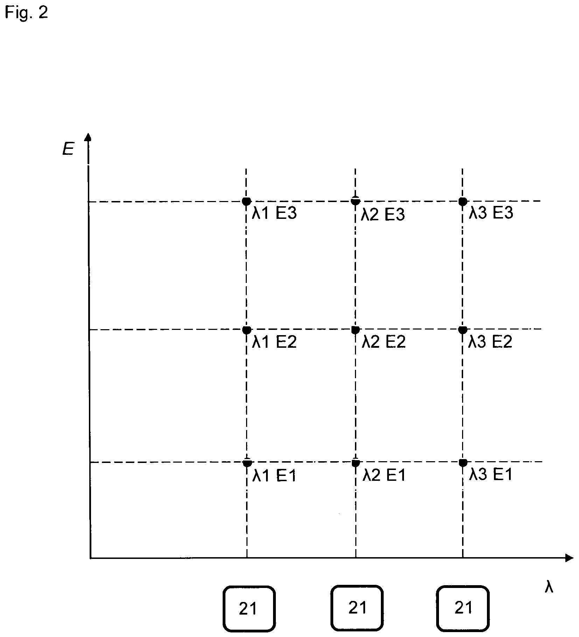

Fig. 2 zeigt in einem Ausführungsbeispiel eine mögliche Systematik von Bildaufnahmen aus Erfassungsvorgängen. Die Abszisse repräsentiert die Wellenlänge λ und die Ordinate das Strahlungsenergieniveau *E.* In dem Ausführungsbeispiel werden die Bildaufnahmen durch drei Bilderfassungseinzeleinheiten 21 aufgenommen, wobei die erste Bilderfassungseinzeleinheit 21 im Wellenlängenarbeitsspektrum λ1 im UV-Bereich, die zweite Bilderfassungseinzeleinheit 21 im Wellenlängenarbeitsspektrum λ2 im sichtbaren Lichtbereich und die dritte Bilderfassungseinzeleinheit 21 im Wellenlängenarbeitsspektrum λ3 im IR-Bereich arbeitet. Jede der Bilderfassungseinheiten erzeugt drei Bildaufnahmen mit unterschiedlichen Strahlungsenergieniveaus E1, E2 und E3.

Die Bildaufnahmen λ1E1 bis λ3E3 werden an die Auswertungseinheit übertragen. Im Ausführungsbeispiel wird zunächst eine Zuordnung innerhalb eines Wellenlängenarbeitsspektrums vorgenommen und so beispielsweise von dem Differenzwerteerzeugungsmodul ein Differenzwert aus den Bildaufnahmen λ1E1 und λ1E2 sowie ferner ein weiterer Differenzwert aus den Bildaufnahmen λ1E2 und λ1E3 gebildet. In gleicher Weise werden jeweils Differenzwerte aus den Bildaufnahmen λ2E1 und λ2E2 sowie aus λ2E2 und λ2E3 uns so weiter gebildet. Zudem werden zusätzliche Differenzwerte zwischen den Bildaufnahmen unterschiedlicher Wellenlängenarbeitsspektren aber gleicher Strahlungsenergieniveaus wie beispielsweise aus den Bildaufnahmen λ1E1 und λ2E1 und so weiter gebildet. Möglich sind aber auch Differenzwerte aus beliebigen "n-zu-n"-Zuordnungen wie beispielsweise λ1E2 und λ3E3.

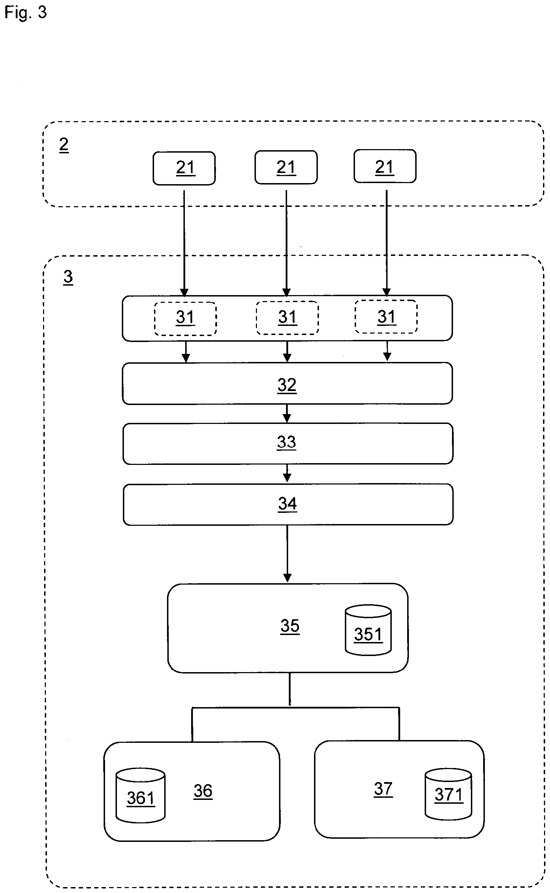

Fig. 3 zeigt ein weiteres Ausführungsbeispiel in einer Darstellung als Blockschaltbild, wobei hier zusätzlich sowohl eine Reparaturbewertung als auch eine Wertermittlung durchführbar ist.

Für die Bilderfassungseinzeleinheiten 21 der optischen Bilderfassungseinheit 2, das Differenzwerteerzeugungsmodul 31, das Differenzwertebewertungsmodul 33, das Gesamtbewertungsmodul 33 und das Generierungsmodul 34 gelten in entsprechender Weise die Erläuterungen zu dem Ausführungsbeispiel gemäß Fig.1 und Fig. 2.

Nachdem das digitale Oberflächenbeschaffenheitsabbild durch das Generierungsmodul 33 erzeugt wurde, wird es in dem Ausführungsbeispiel gemäß Fig. 3 an ein Vergleichsmodul 35 übertragen. Das Vergleichsmodul 35 enthält eine Datenbasis 351 als Datenbank mit Daten zu normativen digitalen Oberflächenbeschaffenheitsabbildern vieler Fahrzeugmodelle in unterschiedlichen Ausstattungen, wobei auch das normative Oberflächenbeschaffenheitsabbild des erfassten Fahrzeugs 4 enthalten ist. Diese Datenbank wird regelmäßig um neu auf dem Markt erscheinende Fahrzeugmodelle ergänzt. Das Vergleichsmodul 35 erkennt anhand des digitalen Oberflächenbeschaffenheitsabbilds das Fahrzeugmodell des erfassten Fahrzeugs 4 und nimmt einen Vergleich zwischen dem digitalen Oberflächenbeschaffenheitsabbild des erfassten Fahrzeugs 4, das es von dem Generierungsmodul 34 erhalten hat, und dem normativen Oberflächenbeschaffenheitsabbild des entsprechenden Modells, dass es der Datenbasis 351 entnommen hat, vor und erzeugt ein digitales Differenzabbild. Das digitale Differenzabbild enthält die Informationen über Abweichungen des erfassten Fahrzeugs 4 von einem original hergestellten Fahrzeug, so dass insbesondere verdeckte Beschädigungen erkennbar sind.

Das digitale Differenzabbild wird sowohl dem Reparaturbewertungsmodul 36 als auch parallel dem Wertermittlungsmodul 37 zur Verfügung gestellt.

Das Reparaturberechnungsmodul 36 verfügt über eine Datenbasis 361 mit Reparaturdaten. Bei den Reparaturdaten handelt es sich um modellbezogene Daten zu Ersatzteilen, zu Reparaturarbeitszeiten und zu Reparaturkosten, wobei die Reparaturkosten als Einheitspreise hinterlegt sind. Auf der Grundlage des digitalen Differenzabbilds und der Reparaturdaten bestimmt das Reparaturbewertungsmodul, welche Ersatzteile für eine Reparatur benötigt werden und welche Reparaturarbeitszeiten aufzuwenden sind sowie welche Reparaturkosten gemäß den hinterlegten Einheitspreisen anfallen und gibt dies als Reparaturbewertung aus.

Kumulativ oder alternativ kann mittels des Wertermittlungsmoduls 37 der Handelswert des erfassten Fahrzeugs 4 bestimmt werden.

Das Wertermittlungsmodul 37 weist hierzu eine Datenbasis 371 mit Fahrzeugpreisdaten auf. Die Fahrzeugpreisdaten enthalten insbesondere Daten zu Listenpreisen und alters- sowie laufleistungsabhängigen Marktpreisen vieler Fahrzeugmodelle, wobei auch Daten zu dem Modell des erfassten Fahrzeugs 4 enthalten sind. Auf der Grundlage der Fahrzeugpreisdaten, des digitalen Differenzabbilds und der Reparaturdaten erstellt das Wertermittlungsmodul 37 eine Fahrzeugwertermittlung. Optional können über das digitale Abbild und das digitale Differenzabbild auch ergänzende Fahrzeugdaten, wie beispielsweise die Anzahl der Vorbesitzer, manuell eingegeben und von dem Wertermittlungsmodul 37 bei der Erstellung der Fahrzeugwertermittlung berücksichtigt werden.

### Verwendete Bezugszeichen

- 1: Fahrzeugpositionierungseinheit
- 11: Plattform
- 12: Plattformpositionserfassungseinheit
- 2: optische Bilderfassungseinheit
- 21: Bilderfassungseinzeleinheit
- 211: Lichtstrahlungsquelle
- 212: Bildkamera
- 22: Bilderfassungsbereich
- 23: Positionierungseinheit
- 3: Auswertungseinheit
- 31: Differenzwerteerzeugungsmodul
- 32: Differenzwertebewertungsmodul
- 33: Gesamtwertbewertungsmodul
- 34: Generierungsmodul
- 35: Vergleichsmodul
- 351: Datenbasis des Vergleichsmoduls
- 36: Reparaturberechnungsmodul
- 361: Datenbasis des Reparaturberechnungsmoduls
- 37: Wertermittlungsmodul
- 371: Datenbasis des Wertermittlungsmoduls
- 4: Fahrzeug
- 5: Umhausung

## Patentansprüche

1. Fahrzeugoberflächenanalysesystem,
aufweisend eine Fahrzeugpositionierungseinheit (1), eine optische Bilderfassungseinheit (2) und eine Auswertungseinheit (3),
wobei die Fahrzeugpositionierungseinheit eine Plattform (11) und eine Plattformpositionserfassungseinheit (12) aufweist, wobei die Plattform (11) ausgebildet ist, ein Fahrzeug (4) hierauf aufzustellen, wobei die Plattform (11) rotierbar um eine Vertikalachse des aufgestellten Fahrzeugs (4) ist, und
wobei die Plattformpositionserfassungseinheit (12) ausgebildet ist, Plattformpositionsdaten zu erfassen und diese an die Auswertungseinheit (3) übertragbar bereitzustellen,
wobei die optischen Bilderfassungseinheit (2) mehrere Bilderfassungseinzeleinheiten (21) und eine Positionierungseinheit (23) aufweist,
wobei jede der Bilderfassungseinzeleinheiten (21) eine Lichtstrahlungsquelle (211) und eine Bildkamera (212) aufweist,
wobei jede der Bilderfassungseinzeleinheiten (21) einen Bilderfassungsbereich (22) aufweist, wobei der Bilderfassungsbereich (22) eine Oberfläche des Fahrzeugs (4) zumindest abschnittsweise umfasst,
wobei jede der Bilderfassungseinzeleinheiten (21) ein Wellenlängenarbeitsspektrum aufweist, welches sich von einem Wellenlängenarbeitsspektrum einer anderen der Bildeinzelerfassungseinheiten (21) unterscheidet,
wobei die Lichtstrahlungsquelle (221) jeder der Bilderfassungseinzeleinheiten (21) ausgebildet ist, mehrere unterschiedliche Strahlungsenergieniveaus bereitzustellen,
wobei die Positionierungseinheit (23) eine Lagebeziehung der optischen Bilderfassungseinzeleinheiten (21) zueinander und zu der Fahrzeugpositionierungseinheit (1) festlegt,
wobei die Bilderfassungseinzeleinheiten (21) ausgebildet sind, Bildpunktdaten einer Bildaufnahme von Objektpunkten des Fahrzeugs (4) zu erfassen und an die Auswertungseinheit (3) übertragbar bereitzustellen, wobei die Bildpunktdaten wellenlängenbezogene und strahlungsenergieniveaubezogene Lichtintensitätswertdaten und Koordinatendaten der Objektpunkte enthalten
wobei die Auswertungseinheit (3) ein Differenzwerteerzeugungsmodul (31), ein Differenzwertebewertungsmodul (32), ein Gesamtbewertungsmodul (33) und ein Generierungsmodul (34) aufweist,
wobei das Differenzwerteerzeugungsmodul (31) ausgebildet ist, die Lichtintensitätswertdaten der Bildaufnahme für einen Objektpunkt mittels der zugehörigen Koordinatendaten den Lichtintensitätswertdaten mindestens einer weiteren Bildaufnahme für denselben Objektpunkt zuzuordnen, in einem Lichtintensitätswertdatenvergleich die Lichtintensitätswertdaten zu vergleichen und hieraus Differenzwertdaten zu erzeugen, sowie die Differenzwertdaten für das Differenzwertebewertungsmodul (32) bereitzustellen,
wobei das Differenzwertebewertungsmodul (32) ausgebildet ist, eine Bewertung einer Qualität der Differenzwertdaten und auf der Grundlage der Bewertung eine Kategorisierung als verwertbare Differenzwertdaten bei einem Erreichen eines einstellbaren Qualitätswertes der Differenzwertqualität und als nicht verwertbare Differenzwertdaten bei einer Unterschreitung des Qualitätswertes durchzuführen und verwertbare Differenzwertdaten an das Gesamtbewertungsmodul (33) übertragbar bereitzustellen,
wobei durch das Gesamtbewertungsmodul (32) ausgebildet ist, anhand der Koordinatendaten zu den Objektpunkten die verwertbaren Differenzwertdaten aus dem Lichtintensitätswertdatenvergleich weiteren verwertbaren Differenzwertdaten aus einem weiteren Lichtintensitätswertdatenvergleich einander zuzuordnen,
einen Vergleich des Qualitätswertes der verwertbaren Differenzwertdaten aus dem Lichtintensitätswertdatenvergleich mit dem Qualitätswert der weiteren verwertbaren Differenzwertdaten aus dem weiteren Lichtintensitätswertdatenvergleich durchzuführen, sowie eine Gewichtung der verwertbaren Differenzwertdaten in Abhängigkeit von dem Qualitätswert als gewichtete Differenzwertdaten durchzuführen,
wobei das Generierungsmodul (33) ausgebildet ist, die Koordinatendaten aus den Bildpunktdaten unter Einbeziehung der Plattformpositionsdaten einem einheitlichen Raumkoordinatensystem zuzuordnen, ein digitales Oberflächenkonturabbild des Fahrzeugs (4) in dem einheitlichen Raumkoordinatensystem zu erzeugen, das digitale Oberflächenkonturabbild des Fahrzeugs (4) durch Hinzufügung der gewichteten Differenzwertdaten anhand der Koordinatendaten zu einem digitalen Oberflächenbeschaffenheitsabbild des Fahrzeugs zu ergänzen und das digitale Oberflächenbeschaffenheitsabbild ausgebbar bereitzustellen.

2. Fahrzeugoberflächenanalysesystem nach Anspruch 1,
**dadurch gekennzeichnet,**
**dass** das Fahrzeugerfassungssystem eine Umhausung (5) aufweist, wobei die Fahrzeugpositionierungseinheit (1) innerhalb der Umhausung (5) angeordnet ist.

3. Fahrzeugoberflächenanalysesystem nach einem der vorhergehenden Ansprüche,
**dadurch gekennzeichnet,**
**dass** das Fahrzeugerfassungssystem ein Vergleichsmodul (35) aufweist, wobei das Vergleichsmodul (35) eine Datenbasis mit Daten zu einem normativen digitalen Oberflächenbeschaffenheitsabbild aufweist, wobei das Vergleichsmodul (35) ausgebildet ist, einen Vergleich zwischen dem digitalen Oberflächenbeschaffenheitsabbild und dem normativen Oberflächenbeschaffenheitsabbild durchzuführen und ein digitales Differenzabbild zu erzeugen.

4. Fahrzeugoberflächenanalysesystem nach Anspruch 3,
**dadurch gekennzeichnet,**
**dass** das Fahrzeugerfassungssystem ein Reparaturberechnungsmodul (36) aufweist, wobei das Reparaturberechnungsmodul (36) eine Datenbasis mit Reparaturdaten aufweist, wobei die Reparaturdaten Daten zu Ersatzteilen, zu Reparaturarbeitszeiten und zu Reparaturkosten aufweisen, wobei das Reparaturberechnungsmodul (36) ausgebildet ist, auf der Grundlage des digitalen Differenzabbilds und der Reparaturdaten eine Reparaturbewertung zu erstellen, wobei die Reparaturbewertung für eine Reparatur benötigte Ersatzteile, aufzuwendende Reparaturarbeitszeiten und Reparaturkosten aufweist.

5. Fahrzeugoberflächenanalysesystem nach einem der vorhergehenden Ansprüche 3 und 4,
**dadurch gekennzeichnet,**
**dass** das Fahrzeugoberflächensystem ein Wertermittlungsmodul (37) aufweist, wobei das Wertermittlungsmodul (37) eine Datenbasis mit Fahrzeugpreisdaten aufweist und wobei das Wertermittlungsmodul (37) ausgebildet ist, auf der Grundlage der Fahrzeugpreisdaten, des digitalen Differenzabbilds und der Reparaturdaten eine Fahrzeugwertermittlung zu erstellen.

## Claims

1. A vehicle surface analysis system,
comprising a vehicle positioning unit (1), an optical image acquisition unit (2) and an evaluation unit (3),
wherein the vehicle positioning unit comprises a platform (11) and a platform position detection unit (12), wherein the platform (11) is designed to support a vehicle (4) thereon, wherein the platform (11) is rotatable about a vertical axis of the placed vehicle (4), and wherein the platform position detection unit (12) is designed to record platform position data and to provide them in a transmittable form to the evaluation unit (3),
wherein the optical image acquisition unit (2) comprises several individual image acquisition units (21) and a positioning unit (23),
wherein each of the individual image acquisition units (21) comprises a light radiation source (211) and an image camera (212),
wherein each of the individual image acquisition units (21) has an image acquisition range (22), wherein the image acquisition range (22) covers a surface of the vehicle (4) at least in sections,
wherein each of the individual image acquisition units (21) has a wavelength work spectrum different from a wavelength work spectrum of another one of the individual image acquisition units (21),
wherein the light radiation source (221) of each of the individual image acquisition units (21) is designed to provide a plurality of different radiation energy levels,
wherein the positioning unit (23) determines a positional relationship of the individual optical image acquisition units (21) with respect to each other and with respect to the vehicle positioning unit (1),
wherein the individual image acquisition units (21) are designed to acquire pixel data of an image acquisition of object points of the vehicle (4) and to provide them in a transmittable form to the evaluation unit (3), wherein the pixel data contain wavelength-related and radiation energy level-related light intensity value data and coordinate data of the object points,
wherein the evaluation unit (3) comprises a difference value generation module (31), a difference value assessment module (32), an overall assessment module (33) and a generation module (34),
wherein the difference value generation module (31) is designed to map the light intensity value data of the image acquisition for an object point by means of the associated coordinate data to the light intensity value data of at least one further image acquisition for the same object point, to compare the light intensity value data in a light intensity value data comparison and to generate difference value data therefrom, as well as to provide the difference value data to the difference value assessment module (32),
wherein the difference value assessment module (32) is designed to carry out an evaluation of a quality of the difference value data and, on the basis of the evaluation, to carry out a categorization in usable difference value data when an adjustable quality value of the difference value quality is reached and in non-usable difference value data when the quality value is not reached, and to provide usable difference value data in a transmittable form to the overall assessment module (33),
wherein the overall assessment module (32) is designed to use the coordinate data for the object points to map the usable difference value data from the light intensity value data comparison to further usable difference value data from a further light intensity value data comparison, to perform a comparison of the quality value of the usable difference value data from the light intensity value data comparison with the quality value of the further usable difference value data from the further light intensity value data comparison, and to perform a weighting of the usable difference value data, depending on the quality value, as weighted difference value data,
wherein the generation module (33) is designed to map the coordinate data from the pixel data to a uniform spatial coordinate system by including the platform position data, to generate a digital surface contour image of the vehicle (4) in the uniform spatial coordinate system, to supplement the digital surface contour image of the vehicle (4) by adding the weighted difference value data on the basis of the coordinate data to create a digital surface quality image of the vehicle, and to provide the digital surface quality image in a displayable manner.

2. The vehicle surface analysis system according to claim 1,
**characterized in**
**that** the vehicle recording system comprises a housing (5), wherein the vehicle positioning unit (1) is arranged within the housing (5).

3. The vehicle surface analysis system according to any one of the preceding claims,
**characterized in**
**that** the vehicle recording system comprises a comparison module (35), wherein the comparison module (35) includes a database with data on a normative digital surface condition image, wherein the comparison module (35) is designed to carry out a comparison between the digital surface condition image and the normative surface condition image and to generate a digital difference image.

4. The vehicle surface analysis system according to claim 3,
**characterized in**
**that** the vehicle recording system comprises a repair calculation module (36), wherein the repair calculation module (36) comprises a database with repair data, wherein the repair data include data on spare parts, on repair work times and on repair costs, wherein the repair calculation module (36) is designed to generate a repair assessment on the basis of the digital difference image and the repair data, wherein the repair assessment comprises spare parts required for a repair, repair work times to be spent and repair costs.

5. The vehicle surface analysis system according to any one of the preceding claims 3 and 4,
**characterized in**
**that** the vehicle surface system comprises a valuation module (37), wherein the valuation module (37) comprises a database with vehicle price data and wherein the valuation module (37) is designed to generate a vehicle valuation based on the vehicle price data, the digital difference image and the repair data.

## Revendications

1. Système d'analyse de la surface des véhicules,
présentant une unité de positionnement de véhicule (1), une unité de saisie d'images (2) et une unité d'évaluation (3),
dans lequel l'unité de positionnement de véhicule comporte une plateforme (11) et une unité de détection de position de plateforme (12), dans lequel la plateforme (11) est conçue pour y placer un véhicule (4), dans lequel la plateforme (11) est rotative autour d'un axe vertical du véhicule (4) placé, et dans lequel l'unité de détection de position de plateforme (12) est conçue pour détecter des données de position de plateforme et les mettre à disposition de manière transmissible à l'unité d'évaluation (3),
où l'unité de saisie d'images optique (2) présente plusieurs unités individuelles de saisie d'images (21) et une unité de positionnement (23), où chacune des unités individuelles de saisie d'images (21) présente une source de rayonnement lumineux (211) et une caméra d'imagerie (212), où chacune des unités individuelles de saisie d'images (21) présente une zone de saisie d'images (22), la zone de saisie d'images (22) comprenant une surface du véhicule (4) au moins par sections,
où chacune des unités individuelles de saisie d'images (21) présente un spectre de travail de longueur d'onde qui est différent d'un spectre de travail de longueur d'onde d'une autre des unités individuelles de saisie d'images (21),
où la source de rayonnement lumineux (221) de chacune des unités individuelles de saisie d'images (21) est adaptée pour fournir une pluralité de niveaux d'énergie de rayonnement différents,
où l'unité de positionnement (23) détermine une relation de position des unités optiques individuelles de saisie d'images (21) les unes par rapport aux autres et par rapport à l'unité de positionnement de véhicule (1),
où les unités individuelles de saisie d'images (21) sont conçus pour saisir des données de points d'image d'une prise de vue de points d'objet du véhicule (4) et les mettre à disposition de manière transmissible à l'unité d'évaluation (3), les données de points d'image contenant des données de valeurs d'intensité lumineuse relatives à la longueur d'onde et au niveau d'énergie de rayonnement et des données de coordonnées des points d'objet,
où l'unité d'évaluation (3) comporte des modules de génération de valeurs différentielles (31), un module d'évaluation de valeurs différentielles (32), un module d'évaluation global (33) et un module de génération (34),
où le module de génération de valeurs différentielles (31) est conçu pour associer les données de valeur d'intensité lumineuse de la prise de vue pour un point d'objet aux données de valeur d'intensité lumineuse d'au moins une autre prise de vue pour le même point d'objet au moyen des données de coordonnées associées, pour comparer les données de valeur d'intensité lumineuse dans une comparaison de données de valeur d'intensité lumineuse et pour générer des données de valeur différentielle à partir de celles-ci, ainsi que pour mettre à disposition les données de valeur différentielle pour le module d'évaluation de valeurs différentielles (32),
où le module d'évaluation des valeurs différentielles (32) est conçu pour effectuer une évaluation d'une qualité des données de valeurs différentielles et, sur la base de l'évaluation, une catégorisation en tant que données de valeurs différentielles utilisables lorsqu'une valeur de qualité réglable de la qualité des valeurs différentielles est atteinte et en tant que données de valeurs différentielles non utilisables lorsque la valeur de qualité n'est pas atteinte, et pour mettre à disposition de manière transmissible des données de valeurs différentielles utilisables au module d'évaluation global (33),
où le module d'évaluation globale (33) est conçu pour associer, à l'aide des données de coordonnées relatives aux points de l'objet, les unes aux autres les données de valeur différentielle utilisables issues de la comparaison des données de valeur d'intensité lumineuse à d'autres données de valeur différentielle utilisables issues d'une autre comparaison des données de valeur d'intensité lumineuse, effectuer une comparaison de la valeur de qualité des données de valeur différentielle utilisables issues de la comparaison des données de valeur d'intensité lumineuse avec la valeur de qualité des autres données de valeur différentielle utilisables issues de l'autre comparaison des données de valeur d'intensité lumineuse, ainsi qu'effectuer une pondération des données de valeur différentielle utilisables en fonction de la valeur de qualité en tant que données de valeur différentielle pondérée,
où le module de génération (33) est conçu pour associer les données de coordonnées provenant des données de points d'image à un système de coordonnées spatiales uniforme en incluant les données de position de plate-forme, pour générer une image numérique de contour de surface du véhicule (4) dans le système de coordonnées spatiales uniforme, pour compléter l'image numérique de contour de surface du véhicule (4) en ajoutant les données de valeurs différentielles pondérées à l'aide des données de coordonnées pour obtenir une image numérique de l'état de surface du véhicule et pour mettre à disposition l'image numérique de l'état de surface de manière à ce qu'elle puisse être affichée.

2. Système d'analyse de la surface des véhicules selon la revendication 1
est **caractérisé en ce**
**que** le système de détection de véhicule présente un boîtier (5), l'unité de positionnement de véhicule (1) étant disposée à l'intérieur du boîtier (5).

3. Système d'analyse de la surface des véhicules suivant l'une quelconque des revendications précédentes
est **caractérisé en ce**
**que** le système de détection de véhicule comporte un module de comparaison (35), le module de comparaison (35) présentant une base de données avec des données relatives à une image de l'état de surface numérique normative, le module de comparaison (35) étant conçu pour effectuer une comparaison entre l'image de l'état numérique et l'image de l'état normative et pour générer une image numérique différentielle.

4. Système d'analyse de la surface des véhicules selon la revendication 3
est **caractérisé en ce**
**que** le système de détection de véhicule comporte un module de calcul de réparation (36), le module de calcul de réparation (36) présentant une base de données avec des données de réparation, les données de réparation présentant des données sur des pièces de rechange, sur des temps de travail de réparation et des coûts de réparation, le module de calcul de réparation (36) étant conçu pour établir une évaluation de réparation sur la base de l'image différentielle numérique et des données de réparation, l'évaluation de réparation présentant des pièces de rechange nécessaires pour une réparation, des temps de travail de réparation à dépenser et des coûts de réparation. -

5. Système d'analyse de la surface des véhicules suivant l'une quelconque des revendications précédentes 3 et 4
est **caractérisé en ce**
**que** le système de surface des véhicules comporte un module de détermination de valeur (37), le module de détermination de valeur (37) présentant une base de données avec des données de prix de véhicule et le module de détermination de valeur (37) étant conçu pour établir une détermination de valeur de véhicule sur la base des données de prix de véhicule, de l'image numérique de différence et des données de réparation.
